# EUROPÄISCHE PATENTSCHRIFT

(11) **EP 2 072 960 B1**
(45) Veröffentlichungstag und Bekanntmachung des Hinweises auf die Patenterteilung: **25.01.2017**
(21) Anmeldenummer: 08022055.1
(22) Anmeldetag: 18.12.2008
(51) Int. Cl.: G01D 5/245, G01D 5/244, G01D 5/20

(54) **Inkrementalweggeber und Verfahren zum Bestimmen einer Verschiebung eines ersten Objekts relativ zu einem zweiten Objekt**
Incremental displacement sensor and method for determining the displacement of an object relative to another object
Dispositif de mesure incrémental de déplacement et procédé de détermination d'un déplacement d'un premier objet par rapport à un second objet

(30) Priorität: 21.12.2007 DE 102007061967
(43) Veröffentlichungstag der Anmeldung: 24.06.2009
(73) Patentinhaber: Pepperl + Fuchs GmbH, 68307 Mannheim (DE)
(72) Erfinder: Speckmann, Christian, 64625 Bensheim (DE); Galm, Timo, 68239 Mannheim (DE)
(74) Vertreter: Schiffer, Axel Martin

(56) Entgegenhaltungen:
- EP-A2- 1 992 914
- WO-A2-2006/106421
- US-A1- 2007 013 574

## Beschreibung

Die vorliegende Erfindung betrifft in einem ersten Aspekt einen Inkrementalweggeber nach dem Oberbegriff des Anspruchs 1.

In einem weiteren Aspekt bezieht sich die Erfindung auf ein Verfahren zum Bestimmen einer Verschiebung eines ersten Objekts relativ zu einem zweiten Objekt nach dem Oberbegriff des Anspruchs 6.

Ein gattungsgemäßer Inkrementalweggeber ist beispielsweise aus DE 197 01 319 A1 bekannt. Ein solcher Inkrementalweggeber weist eine mit dem ersten Objekt verbundene oder zu verbindende Abtasteinheit zum Abtasten einer mit dem zweiten Objekt verbundenen oder zu verbindenden Teilungsspur mit ersten Bereichen und zweiten Bereichen auf, die mit einer Periodenlänge abwechselnd angeordnet sind. Hierbei weisen die ersten Bereiche eine erste physikalische Eigenschaft und die zweiten Bereiche eine davon unterschiedliche zweite physikalische Eigenschaft auf. Außerdem weist die Abtasteinheit eine Mehrzahl von Sensoren zum Abtasten der ersten Bereiche und zweiten Bereiche aufgrund der ersten und/oder der zweiten physikalischen Eigenschaft auf. Schließlich ist eine mit der Abtasteinheit verbundene Auswerteeinheit vorhanden zum Bestimmen der Verschiebung auf Grundlage von Messsignalen der Sensoren.

Bei einem gattungsgemäßen Verfahren, welches ebenfalls aus DE 197 01 319 A1 bekannt ist, wird eine mit dem ersten Objekt verbundene Teilungsspur mit einer Mehrzahl von Sensoren, die mit dem zweiten Objekt verbunden sind, abgetastet. Die Teilungsspur weist dabei erste Bereiche mit einer ersten physikalischen Eigenschaft und zweite Bereiche mit einer zweiten physikalischen Eigenschaft auf, die mit einer Periodenlänge abwechselnd angeordnet sind und aus Messsignalen der Sensoren, die aufgrund der ersten und/oder der zweiten physikalischen Eigenschaft gewonnen werden, wird die Verschiebung des ersten Objekts relativ zu dem zweiten Objekt bestimmt.

Induktive Inkrementalweggeber sind außerdem in DE 31 00 486 A1, EP 1 071 927 B1, US-4,893,078, EP 0 455 613 B1, DE 20 2007 012 087 U1, EP 1 225 426 B1, US-6,304,832 B1 und US-5,003,260 beschrieben.

In US 2007/0013574 A1 ist ein inkrementaler Encoder mit vier Sensorgruppen, bestehend jeweils aus vier Photodioden, beschrieben. Aus den Signalen der Photodioden wird jeweils ein Ausgangssignal generiert und die Ausgangssignale der Sensorgruppen werden miteinander zu weiteren Signalen logisch verknüpft.

Inkrementalweggeber werden zur Messung von Lageänderungen verwendet. Dabei bestimmen zwei zueinander versetzte Sensoren jeweils die Position einer Teilungsspur. Durch Zählen der Einzelimpulse kann die Bewegung der Teilungsspur relativ zu den Sensoren bestimmt werden. Da die von den beiden Sensoren erzeugten Signale einen Phasenversatz von beispielsweise 90° haben, ist außerdem eine Richtungserkennung möglich.

Wenn bei dem Inkrementalweggeber induktive Sensoren eingesetzt werden, ergeben sich Schwierigkeiten aufgrund der Abhängigkeit des Schaltpunkts der Sensoren bei seitlicher Annäherung eines metallischen Objekts, beispielsweise eines leitenden Bereichs der Teilungsspur, von der Entfernung des Sensors zur Teilungsspur. Der leitende Bereich der Teilungsspur wird umso früher erkannt, je näher er sich vor dem Sensor befindet.

Das für die Richtungserkennung gewünschte 1:1-Puls-Pausen-Verhältnis lässt sich so nur für einen ganz bestimmten Abstand erzielen.

Weiterhin sind im Stand der Technik jeweils Teilungsspuren erforderlich, bei denen die ersten und die zweiten Bereiche jeweils dieselbe Ausdehnung haben. In der Praxis müssen deshalb Teilungsspuren in den meisten Fällen separat an den zu überwachtenden Objekten angebracht werden, selbst wenn sich wiederholende Strukturen, die grundsätzlich zum Erkennen einer Verschiebung geeignet wären, bereits vorhanden sind.

Eine **Aufgabe** der Erfindung ist, einen Inkrementalweggeber und ein Verfahren zum Bestimmen der Verschiebung eines ersten Objekts relativ zu einem zweiten Objekt zu schiffen, bei denen weitgehend unabhängig vom konkreten Abstand der eingesetzten Sensoren zu einer Teilungsspur und weitgehend unabhängig von der konkret verwendeten Teilungsspur zuverlässige Messresultate geliefert werden.

Diese Aufgabe wird in einem ersten Aspekt der Erfindung durch den Inkrementalweggeber des Anspruchs 1 gelöst

In einem weiteren Gesichtspunkt der Erfindung wird die Aufgabe durch das Verfahren mit den Merkmalen des Anspruchs 6 gelöst.

Vorteilhafte Weiterbildungen des erfindungsgemäßen Inkrementalweggebers sind Gegenstand der abhängigen Ansprüche und werden außerdem in der nachfolgenden Beschreibung, insbesondere im Zusammenhang mit den Figuren, beschrieben.

Der Inkrementalweggeber der oben genannten Art ist erfindungsgemäß dadurch weitergebildet, dass die Abtasteinheit mindestens vier Sensoren aufweist, die über mindestens eine Periodenlänge der Teilungsspur verteilt voneinander beabstandet angeordnet sind, dass in der Auswerteeinheit zum Bestimmen der Verschiebung mindestens ein erstes Schaltsignal aus den Messsignalen der Sensoren generierbar ist, dass das erste Schaltsignal einen ersten Wert, insbesondere HIGH, annimmt, wenn das Messsignal eines ersten ausgewählten Sensors einer ersten Untergruppe von Sensoren einen Maximalwert innerhalb der ersten Untergruppe einnimmt und gleichzeitig das Messsignal eines zweiten ausgewählten Sensors einer zweiten Untergruppe von Sensoren einen Maximalwert innerhalb der zweiten Untergruppe annimmt und/oder dass das erste Schaltsignal einen ersten Wert, insbesondere HIGH, annimmt, wenn das Messsignal eines dritten ausgewählten Sensors einer dritten Untergruppe von Sensoren einen Maximalwert innerhalb der dritten Untergruppe einnimmt und gleichzeitig das Messsignal eines vierten ausgewählten Sensors einer vierten Untergruppe von Sensoren einen Maximalwert innerhalb der vierten Untergruppe annimmt, und dass das erste Schaltsignal ansonsten einen zweiten Wert, insbesondere LOW, annimmt, wobei jede Untergruppe aus mindestens zwei Sensoren besteht.

Das Verfahren der oben genannten Art ist erfindungsgemäß dadurch weitergebildet, dass mindestens vier Sensoren entlang der Teilungsspur über mindestens eine Periodenlänge der Teilungsspur verteilt voneinander beabstandet angeordnet werden, dass die Verschiebung auf Grundlage mindestens eines ersten Schaltsignals bestimmt wird, dass das erste Schaltsignal einen ersten Wert, insbesondere HIGH, annimmt, wenn das Messsignal eines ersten ausgewählten Sensors einer ersten Untergruppe von Sensoren einen Maximalwert innerhalb der ersten Untergruppe einnimmt und gleichzeitig das Messsignal eines zweiten ausgewählten Sensors einer zweiten Untergruppe von Sensoren einen Maximalwert innerhalb der zweiten Untergruppe annimmt und/oder dass das erste Schaltsignal einen ersten Wert, insbesondere HIGH, annimmt, wenn das Messsignal eines dritten ausgewählten Sensors einer dritten Untergruppe von Sensoren einen Maximalwert innerhalb der dritten Untergruppe einnimmt und gleichzeitig das Messsignal eines vierten ausgewählten Sensors einer vierten Untergruppe von Sensoren einen Maximalwert innerhalb der vierten Untergruppe annimmt, und dass das erste Schaltsignal ansonsten einen zweiten Wert, insbesondere LOW, annimmt, wobei jede Untergruppe aus mindestens zwei Sensoren besteht.

Als ein Kerngedanke der Erfindung kann angesehen werden, die Abstandsabhängigkeit der Sensorsignale auszuschalten durch eine logische Auswertung, bei der es nicht mehr auf die absolute Höhe der Messsignale, sondern auf die relative Höhe eines Messsignals eines ausgewählten Sensors im Vergleich zu Messsignalen von Sensoren die eine Untergruppe bilden, ankommt.

Als zweiten Kerngedanken beinhaltet die Erfindung, damit zusammenhängend, mindestens vier Sensoren über eine Periode der Teilungsspur anzuordnen und eine Unterteilung dieser Sensoren in Untergruppen vorzunehmen, wobei jede Untergruppe aus mindestens zwei Sensoren besteht.

Ein erster wesentlicher Vorteil der erfindungsgemäßen Lösung besteht in der Abstandsunabhängigkeit der Auswertung. Dies ermöglicht besonders vielfältige Einsatzmöglichkeiten im industriellen Bereich, da eine präzise Einrichtung der Messvorrichtung gegenüber der Teilungsspur nicht erforderlich ist.

Ein zweiter wesentlicher Vorteil kann darin gesehen werden, dass die Teilungsspur, im grundlegenden Unterschied zu bekannten Lösungen, nicht eine 1:1-Teilung aufweisen muss. Im Grundsatz kann jede beliebige periodische Struktur zur Generierung des Inkrementalsignals genutzt werden.

Als maximales Messsignal soll hier dasjenige Messsignal verstanden werden, das bei maximaler Annäherung des entsprechenden ersten oder zweiten Bereichs an den fraglichen Sensor von eben diesem Sensor geliefert wird. Bezogen auf 0 kann dies betragsmäßig gegebenenfalls auch ein Minimalwert sein. Letzteres ist beispielsweise der Fall, wenn mit einem induktiven Sensor die Bewegung eines Metallblechs bestimmt wird, in welchem sich in periodischen aber vergleichsweise großen Abständen Löcher befinden. Wenn ein Sensor direkt vor dem Loch positioniert ist, sinkt die Bedämpfung ab auf einen Minimalwert, der jedoch, bezogen auf die Vollbedämpfung ein Maximalwert, nämlich ein Wert maximaler Abweichung, ist.

Wesentlich für die Erfindung ist außerdem, dass die Signale von zwei benachbarten Sensoren sich innerhalb des gewünschten Erfassungsbereichs der Schiene überschneiden. Das bedeutet, dass der laterale Abstand von zwei benachbarten Sensoren im Verhältnis zur lateralen Ausdehnung des kleineren der beiden Bereiche der Teilungsspur so gewählt ist, dass jedenfalls vorübergehend beide Sensoren ein Nachweissignal aufgrund dieses Bereichs liefern.

Hieraus folgt, dass die Stegbreite einer Fahne einer Teilungsspur eine gewisse Mindestbreite haben muss, so dass zumindest vorübergehend zwei benachbarte Sensoren ein Signal aufgrund dieser Fahne liefern. Die genannte Bedingung kann also einerseits durch eine gewisse Mindestbreite des ersten und/oder des zweiten Bereichs und andererseits durch einen gewissen lateralen Höchstabstand der Sensoren erfüllt werden.

Solange die obige Bedingung im Hinblick auf den Abstand der Sensoren erfüllt ist, können die Sensoren grundsätzlich beliebig über eine Periode der Teilungsspur oder auch über mehrere Perioden verteilt angeordnet sein. Prinzipiell sind hier auch variable Abstände der Sensoren voneinander möglich, wobei in bevorzugten Ausführungsvarianten die Sensoren jedoch gleichmäßig voneinander beabstandet angeordnet sind, da sich hierbei die Auswertung einfacher gestaltet.

Aufgrund der Periodizität der Teilungsspur sind Sensorpositionen, die sich um ein ganzzahliges Vielfaches der Periodenlänge unterscheiden, äquivalent. Ein Sensor oder mehrere Sensoren können deshalb um ein ganzzahliges Vielfaches der Periodenlänge versetzt an der Teilungsspur angeordnet werden. Dies kann beispielsweise bei beengten Platzverhältnissen zweckmäßig sein. Die Sensoren der Abtasteinheit können insoweit auch weit auseinanderliegend positioniert sein.

Die Targetbreite, also beispielsweise die Breite oder laterale Ausdehnung des ersten Bereichs, kann auch größer werden als eine Lückenbreite, also eine laterale Ausdehnung des zweiten Bereichs. Dann muss gegebenenfalls statt des maximalen Signals, wie vorstehend erläutert, das Minimum des Signals als Kriterium herangezogen werden,

Die Schaltsignale können auch invertiert ausgegeben werden, das heißt, dass statt des Werts HIGH der Wert LOW ausgegeben wird und umgekehrt.

Prinzipiell kann jede beliebige physikalische Eigenschaft, die mit Sensoren bestimmt werden kann, zur Bildung der Teilungsspur dienen. Beilspielsweise können die ersten und die zweiten Bereiche unterschiedliche magnetische, optische oder auch mechanische Eigenschaften aufweisen.

Besonders zahlreiche Einsatzmöglichkeiten und besonders zuverlässig im Hinblick auf den Betrieb in industriellen Umgebungen sind Ausführungsvarianten der Erfindung, bei denen die ersten Bereiche elektrisch leitend und die zweiten Bereiche elektrisch isolierend sind und die Sensoren induktive Sensoren sind.

Die Auswertung gestaltet sich einfach, weil erfindungsgemäß jede Untergruppe aus genau zwei Sensoren besteht. Die Bestimmung des Extremwerts reduziert sich dann auf einen Vergleich der Messsignale von zwei Sensoren.

Damit die insgesamt generierte Messinformation effektiv ausgenutzt wird, ist es von Vorteil, wenn jeder Sensor zu mindestens einer Untergruppe gehört.

Grundsätzlich können aber auch periodische Strukturen mit einem größeren Tast- oder Teilungsverhältnis abgefragt werden. Erfindungsgemäß weist die Abtasteinheit acht Sensoren auf und die erste Untergruppe wird durch den siebten und den zweiten Sensor, die zweite Untergruppe durch den achten und den fünften Sensor, die dritte Untergruppe durch den vierten und den ersten Sensor und die vierte Untergruppe schließlich durch den sechsten und den dritten Sensor gebildet. Mit einer solchen Auswertelogik kann unabhängig von einem Teilungsverhältnis der Teilungsspur ein Schaltsignal mit dem Taktverhältnis 1:1 erzeugt werden. Insbesondere sind die Sensoren, die eine Untergruppe bilden, jeweils durch zwei weitere Sensoren getrennt. Dies wird weiter unten noch näher erläutert.

Die numerische Bezeichnung der Sensoren soll hier so verstanden werden, dass beispielsweise bei in einer Reihe angeordneten Sensoren der Sensor ganz links als der erste der dann nach rechts sich anschließende als der zweite und dementsprechend die sich weiter nach rechts anschließenden Sensoren als der dritte, vierte, fünfte, sechste, siebte und schließlich der rechts außen liegende Sensor als der achte Sensor bezeichnet wird.

Allgemein gilt aufgrund der vorstehenden Erläuterungen, dass, je größer das Teilungsverhältnis der periodischen Struktur ist, desto mehr Sensoren benötigt werden.

Die Teilungsspur kann grundsätzlich aus einer beliebigen periodischen Struktur bestehen, die im Hinblick auf das Abtasten geeignete physikalische Eigenschaften aufweist. Beispielsweise kann an einer sich bewegenden oder zu überwachenden Vorrichtung ein bereits vorhandenes Lochgitter als Teilungsspur dienen.

Die Auswahl der Sensoren für die Untergruppen und die jeweilige Auswahl eines Sensors aus einer Untergruppe zur Bildung des ersten Schaltsignals kann, solange die Bedingung, dass die Untergruppen jeweils mindestens zwei Sensoren aufweisen, grundsätzlich beliebig erfolgen.

Um auch eine Richtungsinformation aus den ausgenommenen Messwerten zu erhalten, ist die Auswerteeinheit bevorzugt zum Generieren eines zweiten Schaltsignals eingerichtet, welches relativ zum ersten Schaltsignal eine Phasenverschiebung aufweist. Die Phasenverschiebung darf dabei nicht 0 sein und nicht 180° betragen, da in diesen Fällen gerade keine zusätzliche Information vorliegt. Besonders bevorzugt weist das zweite Schaltsignal eine Phasenverschiebung von 90° auf.

Vorteilhaft wird außerdem die Auswertelogik so gewählt, dass das Tastverhältnis des ersten Schaltsignals und gegebenenfalls auch des zweiten Schaltsignals 1:1 ist. Es kann dann auf bekannte Auswertealgorithmen zurückgegriffen werden.

In der Praxis hat sich gezeigt, dass der Vergleich von Messsignalen von unmittelbar benachbarten Sensoren schwierig ist, da diese Messsignale häufig sehr stark überlappen. Beispielsweise ist, wenn das Messsignal eines ersten Sensors ein Maximum einnimmt, das Messsignal eines benachbarten Sensors noch nicht so stark abgeklungen, dass eine Unterscheidung gut möglich wäre. Bevorzugt werden die Untergruppen deshalb so gewählt, dass sich zwischen den Sensoren, die eine Untergruppe bilden, mindestens ein weiterer Sensor befindet, der nicht zur Untergruppe gehört. Wenn sich beispielsweise zwischen den eine Gruppe bildenden Sensoren jeweils genau ein weiterer Sensor befindet, bedeutet dies, dass jeweils nur die zweithöchsten Messsignale ausgewertet werden. Da die Steigungen der zweithöchsten Signale oder, anders ausgedrückt, die Steigungen der Nachweiskurven von zwei durch einen weiteren Sensor getrennten Sensoren im Schnittpunkt bereits deutlich größer sind als im Bereich der Schnittpunkte der Nachweiskurven von unmittelbar benachbarten Sensoren, können so deutlich besser definierte Schaltpunkte erhalten werden.

Abhängig von einer Dichte der Sensoranordnung und der Überlappungscharakteristik der jeweiligen Nachweiskurven, die ihrerseits von der Teilungsspur abhängt, kann eingestellt werden, wie weit die eine Untergruppe bildenden Sensoren auseinander liegen, das heißt wie viele Sensoren jeweils zwischen zwei Sensoren liegen sollen. Beispielsweise kann bevorzugt sein, dass sich zwischen den Sensoren, die eine Untergruppe bilden, jeweils genau zwei weitere Sensoren befinden. Das bedeutet, dass jeweils die Messkurven im Bereich der Schnittpunkte von Sensoren ausgewertet werden, die durch zwei Sensoren getrennt angeordnet sind. Zum Bestimmen, wie viele Sensoren zwischen zwei Sensoren einer Gruppe liegen, soll die Sensoranordnung periodisch fortgesetzt gedacht werden. Es soll sich demgemäß an einen Sensor 8 gedanklich wieder ein Sensor 1 anschließen, so dass in diesem Beispiel der Sensor 8 und der Sensor 1 als unmittelbar benachbart angesehen werden. Dementsprechend ist der Sensor 7 vom Sensor 2 durch den Sensor 8 und den Sensor 1, also durch zwei Sensoren, getrennt.

Bei einer weiteren Variante der Auswertung, werden die Schaltbedingungen für die erste und die zweite Untergruppe einerseits mit der Schaltbedingung für die dritte und die vierte Untergruppe andererseits durch eine logische UND-Verbindung verknüpft. Das erste Schaltsignal nimmt demgemäß einen ersten Wert, insbesondere HIGH, an, wenn gleichzeitig folgende Bedingungen erfüllt sind: das Messsignal des ersten ausgewählten Sensors nimmt einen Maximalwert innerhalb der ersten Untergruppe an, das Messsignal des zweiten ausgewählten Sensors nimmt einen Maximalwert innerhalb der zweiten Untergruppe an, das Messsignal des dritten ausgewählten Sensors nimmt einen Maximalwert innerhalb der dritten Untergruppe an und das Messsignal des vierten ausgewählten Sensors nimmt einen Maximalwert innerhalb der vierten Untergruppe an. Ansonsten nimmt das erste Schaltsignal einen zweiten Wert, insbesondere LOW, an.

Weitere Vorteile und Merkmale der Erfindung werden nachstehend mit Bezug auf die beigefügten schematischen Figuren erläutert.

Hierin zeigt:
- Fig. 1: ein erstes Ausführungsbeispiel des erfindungsgemäßen Inkrementalweggebers mit acht Sensoren;
- Fig. 2: eine schematische Darstellung der Messsignale der acht Sensoren des in Figur 1 gezeigten Ausführungsbeispiels.

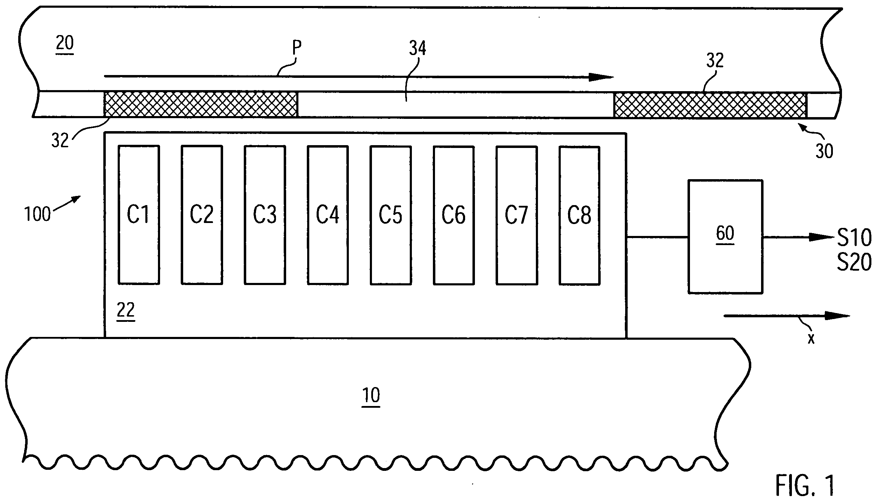

Ein Ausführungsbeispiel des erfindungsgemäßen Inkrementalweggebers wird mit Bezug auf Fig. 1 erläutert.

Der dort dargestellte erfindungsgemäße Inkrementalweggeber 100 weist als wesentliche Bestandteile eine an einem ersten Objekt 10 angeordnete Abtasteinheit 22 mit einer Mehrzahl von Sensoren C1,..,C8 auf, die mit einer Auswerteeinheit 60 verbunden ist.

Die Sensoren C1,..,C8 der Abtasteinheit 22 dienen zum Abtasten einer Teilungsspur 30, die mit einem zweiten Objekt 20 verbunden ist oder gegebenenfalls selbst das zweite Objekt darstellt. Die Teilungsspur 30 besteht im Wesentlichen aus mit einer Periode p abwechselnd angeordneten ersten Bereichen 32 und zweiten Bereichen 34. Diese weisen jeweils unterschiedliche physikalische Eigenschaften auf, wodurch das Abtasten mit Hilfe der Sensoren C1,..,C8 ermöglicht wird. Im gezeigten Beispiel soll es sich bei den ersten Bereichen 32 um elektrisch leitende metallische Fahnen handeln und entsprechend sind die zweiten Bereiche 34 Löcher oder Aussparungen, beispielsweise in einem Blech. Bei den Sensoren C1,..,C8 handelt es sich um induktive Sensoren, beispielsweise induktive Näherungsschalter.

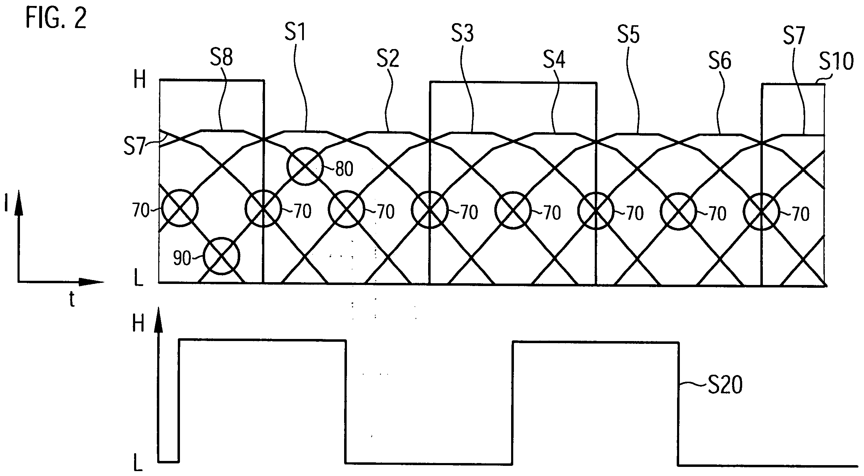

Bei seitlicher Relativbewegung des ersten Objekts 10 bezüglich des zweiten Objekts in einer durch den Pfeil x angeordneten Richtung erhält man zeitliche Verläufe von Messsignalen S1,..,S8 sowie daraus in der Auswerteeinheit 60 abgeleitete Schaltsignale S10, S20, deren zeitliche Verläufe in Fig. 2 schematisch dargestellt sind.

Das erste Schaltsignal S10 wird dabei mit folgender Auswertebedingung generiert:
S10 = HIGH, wenn
S7 > S2 und gleichzeitig S8 > S5
oder S4 > S1 und gleichzeitig S3 > S6,
ansonsten ist S10 LOW.

Obwohl die Teilungsspur 30 nicht ein Teilungsverhältnis 1:1 aufweist, kann gleichwohl ein erstes Schaltsignal S10 mit einem Tastverhältnis 1:1 erzeugt werden, was im Hinblick auf die weitere Auswertung günstig ist.

In entsprechender Weise kann mit der folgenden Bedingung das zweite Schaltsignal S20 generiert werden, welches in Fig. 2 unter dem Verlauf des ersten Signals S10 dargestellt ist. Das zweite Schaltsignal S20 ist gegenüber dem ersten Schaltsignal S10 um 90° phasenverschoben was ebenfalls im Hinblick auf die weitere Auswertung günstig ist.

Das zweite Schaltsignal S20 ist HIGH, wenn
S8 > S3 und gleichzeitig S1 > S6
oder S5 > S2 und gleichzeitig S4 > S7,
ansonsten ist S20 LOW.

Wichtig ist bei diesem Ausführungsbeispiel, dass die Untergruppen, hier also die Sensorpaare (C7; C2), (C8; C5), (C4; C1) und (C3; C6) für das erste Schaltsignal sowie die Sensorpaare (C8; C3), (C1; C6), (C5; C2) und (C4, C7) für das zweite Schaltsignal S20 so gewählt sind, dass jeweils genau zwei Sensoren zwischen den eine Untergruppe bildenden Sensoren liegen. Hierfür soll die Anordnung der Sensoren periodisch fortgedacht werden, so dass sich an den Sensor C8 auf der rechten Seite ein weiterer Sensor C1 anschließt.

Diese Auswahl von Untergruppen führt technisch dazu, dass beispielsweise das Messsignal eines Sensors im Bereich des Schnittpunkts mit dem Messsignal des auf den übernächsten Sensor folgenden Sensors ausgewertet wird. Diese Bereiche sind in Fig. 2 jeweils mit Kreisen 70 gekennzeichnet.

Die Steigungen der Messsignale S1,..,S8 sind in den Bereichen 70 besonders groß, so dass die Schaltpunkte dementsprechend besonders präzise bestimmt werden können.

Grundsätzlich können auch die Schnittpunkte der Messsignale in den mit Kreisen 70, 80, 90 gekennzeichneten Bereichen durch geeignete logische Bedingungen zum Generieren des Schaltsignals herangezogen werden. Insgesamt können auf diese Weise die Schaltsignale sehr spezifisch für die jeweilige Aufgabenstellung erzeugt werden. Beispielsweise können mit der vorstehend beschriebenen Anordnung Ausgangspulse bereitgestellt werden, deren zeitliche Breite minimal einem Viertel der Pulsbreite des Schaltsignals S10 oder S20 beträgt. Wenn beispielsweise alle Schnittpunkte in den Bereichen 70, 80, 90 verwendet würden, würde ein Schaltsignal mit einer im Vergleich zu S10 und S20 viermal höheren Frequenz erzeugt werden.

Mit der vorliegenden Erfindung wird ein neuartiger Inkrementalweggeber und ein Verfahren zum Bestimmen einer Verschiebung eines ersten Objekts relativ zu einem zweiten Objekt bereitgestellt. Wesentliches Merkmal der Erfindung ist eine logische Verknüpfung der Messsignale der einzelnen Sensoren, um ein Schaltsignal oder mehrere Schaltsignale zu generieren. Hierbei sind zahlreiche Kombinationen möglich, so dass insgesamt die Schaltsignale sehr spezifisch eingestellt werden können. Beispielsweise können Schaltsignale erzeugt werden, deren Periodizität ein Vielfaches der Ursprungsperiodizität der Teilungsspur ist. Insbesondere können unterschiedliche Tastverhältnisse erzielt werden und die Ausgangspulse können schmaler als eine Targetbreite werden.

## Patentansprüche

1. Inkrementalweggeber zum Bestimmen einer Verschiebung eines ersten Objekts (10) relativ zu einem zweiten Objekt (20) zur Durchführung des Verfahrens nach Anspruch 6,
mit einer mit dem ersten Objekt (10) verbundenen oder zu verbindenden Abtasteinheit (22) zum Abtasten einer mit dem zweiten Objekt (20) verbundenen oder zu verbindenden Teilungsspur (30) mit ersten Bereichen (32) und zweiten Bereichen (34), die mit einer Periodenlänge (p) abwechselnd angeordnet sind,
wobei die ersten Bereiche (32) eine erste physikalische Eigenschaft und die zweiten Bereiche (34) eine davon unterschiedliche zweite physikalische Eigenschaft aufweisen, und
wobei die Abtasteinheit (22) eine Mehrzahl von Sensoren (C1,..,C8) zum Abtasten der ersten Bereiche (32) und der zweiten Bereiche (34) aufgrund der ersten und/oder der zweiten physikalischen Eigenschaft aufweist, und
mit einer mit der Abtasteinheit (22) verbundenen Auswerteeinheit (60) zum Bestimmen der Verschiebung (x) auf Grundlage von Messsignalen (S1,..,S8) der Sensoren (C1,..,C8),
**dadurch gekennzeichnet,**
**dass** die Abtasteinheit (22) acht Sensoren (C1,..,C8) aufweist, die über mindestens eine Periodenlänge (p) der Teilungsspur (30) verteilt gleichmäßig voneinander beabstandet angeordnet sind,
**dass** in der Auswerteeinheit (60) mindestens ein erstes Schaltsignal (S10) aus den Messsignalen der Sensoren (C1,..,C8) generierbar ist, wobei auf Grundlage dieses mindestens einen ersten Schaltsignals (S10) die Verschiebung (x) bestimmbar ist,
**dass** das erste Schaltsignal (S10) einen ersten Wert, insbesondere HIGH, annimmt, wenn das Messsignal (S7) eines ersten ausgewählten Sensors (C7) einer ersten Untergruppe von Sensoren (C7, C2) einen Maximalwert innerhalb der ersten Untergruppe (C7, C2) einnimmt und gleichzeitig das Messsignal (S8) eines zweiten ausgewählten Sensors (C8) einer zweiten Untergruppe von Sensoren (C8, C5) einen Maximalwert innerhalb der zweiten Untergruppe (C8, C5) annimmt und/oder
**dass** das erste Schaltsignal (S10) einen ersten Wert, insbesondere HIGH, annimmt, wenn das Messsignal (S4) eines dritten ausgewählten Sensors (C4) einer dritten Untergruppe von Sensoren (C4, C1) einen Maximalwert innerhalb der dritten Untergruppe (C4, C1) einnimmt und gleichzeitig das Messsignal (S3) eines vierten ausgewählten Sensors (C3) einer vierten Untergruppe von Sensoren (C3, C6) einen Maximalwert innerhalb der vierten Untergruppe (C3, C6) annimmt,
**dass** das erste Schaltsignal (S10) ansonsten einen zweiten Wert, insbesondere LOW, annimmt,
**dass** die erste Untergruppe (C7, C2) durch den siebten und den zweiten Sensor gebildet ist,
**dass** die zweite Untergruppe (C8, C5) durch den achten und den fünften Sensor gebildet ist,
**dass** die dritte Untergruppe (C4, C1) durch den vierten und den ersten Sensor gebildet ist,
**dass** die vierte Untergruppe (C6, C3) durch den sechsten und den dritten Sensor gebildet ist, und
**dass** eine Mindestbreite des ersten (32) und/oder des zweiten Bereichs (34) oder ein lateraler Höchstabstand der Sensoren (C1,...,C8) und ein Verhältnis von einem lateralen Abstand von zwei benachbarten Sensoren zu einer lateralen Ausdehnung des kleineren der beiden Bereiche (32, 34) der Teilungsspur (30) so gewählt sind, dass jedenfalls vorübergehend beide Sensoren ein Nachweissignal aufgrund des kleineren der beiden Bereiche liefern.

2. Inkrementalweggaber nach Anspruch 1,
**dadurch gekennzeichnet,**
**dass** die ersten Bereiche (32) elektrisch leitend und die zweiten Bereiche (34) elektrisch isolierend sind und
**dass** die Sensoren (C1...,C8) induktive Sensoren (C1,..,C8) sind.

3. Inkrementalweggeber nach einem der Ansprüche 1 oder 2,
**dadurch gekennzeichnet,**
**dass** die Auswerteeinheit (60) zum Generieren eines zweiten Schaltsignals (S20) eingerichtet ist, welches relativ zum ersten Schaltsignal (S10) eine Phasenverschiebung aufweist.

4. Inkrementalweggeber nach einem der Ansprüche 1 bis 3,
**dadurch gekennzeichnet,**
**dass** das Tastverhältnis des ersten Schaltsignals (S10) 1:1 ist.

5. Inkrementalweggeber nach einem der Ansprüche 1 bis 4,
**dadurch gekennzeichnet,**
**dass** die Teilungsspur (30) durch ein Lochgitter gebildet ist.

6. Verfahren zum Bestimmen einer Verschiebung eines ersten Objekts relativ zu einem zweiten Objekt,
unter Verwendung eines Inkrementalweggebers nach einem Ansprüche 1 bis 5,
bei dem eine mit dem ersten Objekt (10) verbundene Teilungsspur (30) mit einer Mehrzahl von Sensoren (C1,..,C8), die mit dem zweiten Objekt (20) verbunden sind, abgetastet wird,
wobei die Teilungsspur (30) erste Bereiche (32) mit einer ersten physikalischen Eigenschaft und zweite Bereiche (34) mit einer zweiten physikalischen Eigenschaft aufweist, die mit einer Periodenlänge (p) abwechselnd angeordnet sind, und
bei dem die Verschiebung des ersten Objekts relativ zu dem zweiten Objekt aus Messsignalen der Sensoren (C1,..,C8), die aufgrund der ersten und/oder der zweiten physikalischen Eigenschaft gewonnen werden, bestimmt wird, **dadurch gekennzeichnet,**
**dass** mindestens vier Sensoren (C1,..,C8) entlang der Teilungsspur (30) über mindestens eine Periodenlänge (p) der Teilungsspur (30) verteilt gleichmäßig voneinander beabstandet angeordnet werden,
**dass** die Verschiebung auf Grundlage mindestens eines ersten Schaltsignals (S10) bestimmt wird,
**dass** das erste Schaltsignal (S10) einen ersten Wert, insbesondere HIGH, annimmt, wenn das Messsignal (S7) eines ersten ausgewählten Sensors (C7) einer ersten Untergruppe (C7, C2) von Sensoren einen Maximalwert innerhalb der ersten Untergruppe (C7, C2) einnimmt und gleichzeitig das Messsignal (S8) eines zweiten ausgewählten Sensors (C8) einer zweiten Untergruppe (C8, C5) von Sensoren einen Maximalwert innerhalb der zweiten Untergruppe (C8, C5) annimmt und/oder
**dass** das erste Schaltsignal (S10) einen ersten Wert, insbesondere HIGH, annimmt, wenn das Messsignal (S4) eines dritten ausgewählten Sensors (C4) einer dritten Untergruppe (C4, C1) von Sensoren einen Maximalwert innerhalb der dritten Untergruppe (C4, C1) einnimmt und gleichzeitig das Messsignal (S3) eines vierten ausgewählten Sensors (C3) einer vierten Untergruppe (C3, C6) von Sensoren einen Maximalwert innerhalb der vierten Untergruppe (C3, C6) annimmt,
**dass** das erste Schaltsignal (S10) ansonsten einen zweiten Wert, insbesondere LOW, annimmt,
**dass** die erste Untergruppe (C7, C2) durch den siebten und den zweiten Sensor gebildet ist,
**dass** die zweite Untergruppe (C8, C5) durch den achten und den fünften Sensor gebildet ist,
**dass** die dritte Untergruppe (C4, C1) durch den vierten und den ersten Sensor gebildet ist und
**dass** die vierte Untergruppe (C6, C3) durch den sechsten und den dritten Sensor gebildet ist, und
**dass** eine Mindestbreite des ersten (32) und/oder des zweiten Bereichs (34) oder ein lateraler Höchstabstand der Sensoren (C1,...,C8) und ein Verhältnis von einem lateralen Abstand von zwei benachbarten Sensoren zu einer lateralen Ausdehnung des kleineren der beiden Bereiche (32, 34) der Teilungsspur (30) so gewählt sind, dass jedenfalls vorübergehend beide Sensoren ein Nachweissignal aufgrund des kleineren der beiden Bereiche liefern.

## Claims

1. Incremental displacement transducer for determining a displacement of a first object (10) relative to a second object (20) for performing the method according to claim 6,
with a scanning unit (22) linked or to be linked with the first object (10) for scanning a division track (30) linked or to be linked with the second object (20) and with first areas (32) and second areas (34) arranged in alternating manner with a period length (p),
the first areas (32) having a first physical property and the second areas (34) a second physical property differing therefrom and
where the scanning unit (22) has a plurality of sensors (C1, ..., C8) for scanning the first areas (32) and second areas (34) on the basis of the first and/or second physical property and
with an evaluating unit (60) linked with the scanning unit (22) for determining the displacement (x) on the basis of measuring signals (S1, ..., S8) of the sensors (C1, ..., C8),
**characterized in that**
the scanning unit (22) has eight sensors (C1, ..., C8) which are arranged in uniformly spaced manner from one another over at least one period length (p) of the spacing track (30),
that at least one first switching signal (S10) can be generated from the measuring signals of the sensors (C1, ..., C8) in the evaluating unit (60) wherein on the basis of this at least one first switching signal (S10) the displacement (x) can be determined,
that the first switching signal (S10) assumes a first value, particularly HIGH, if the measuring signals (S7) of a first selected sensor (C7) of a first subgroup of sensors (C7, C2) assumes a maximum value within the first subgroup (C7, C2) and simultaneously the measuring signal (S8) of a second selected sensor (C8) of a second subgroup of sensors (C8, C5) assumes a maximum value within the second subgroup (C8, C5) and/or
that the first switching signal (S10) assumes a first value, particularly HIGH if the measuring signals (S4) of a third selected sensor (C4) of a third subgroup of sensors (C4, C1) assumes a maximum value within the third subgroup (C4, C1) and simultaneously the measuring signal (S3) of a fourth selected sensor (C3) of a fourth subgroup of sensors (C3, C6) assumes a maximum value within the fourth subgroup (C3, C6),
that the first switching signal (S10) otherwise assumes a second value, particularly LOW,
that the first subgroup (C7, C2) is formed by the seventh and second sensors,
that the second subgroup (C8, C5) is formed by the eighth and fifth sensors,
that the third subgroup (C4, C1) is formed by the fourth and first sensors,
that the fourth subgroup (C6, C3) is formed by the sixth and third sensors, and
that a minimum width of the first (32) and/or the second (34) areas or a lateral maximum distance of the sensors (C1, ..., C8) and a proportion from a lateral distance of two adjacent sensors to a lateral extension of the smaller one of the two areas (32, 34) of the spacing track (30) is selected in such a manner that in any case temporary both sensors deliver a detection signal based on the smaller one of the two areas.

2. Incremental displacement transducer according to claim 1,
**characterized in that**
the first areas (32) are electrically conductive and the second areas (34) are electrically insulating and
that the sensors (C1, ..., C8) are inductive sensors (C1, ..., C8).

3. Incremental displacement transducer according to one of the claims 1 to 2,
**characterized in that**
the evaluating unit (60) is set up for generating a second switching signal (S20) which has a phase shift relative to the first switching signal (S10).

4. Incremental displacement transducer according to one of the claims 1 to 3,
**characterized in that**
the pulse cycle of the first switching signal (S10) is 1:1.

5. Incremental displacement transducer according to one of the claims 1 to 4,
**characterized in that**
the spacing track (30) is formed by a hole lattice.

6. Method for determining a displacement of a first object relative to a second object, using an incremental displacement transducer according to one of the claims 1 to 5,
where a spacing track (30) linked with the first object (10) is scanned by a plurality of sensors (C1, ..., C8) linked with the second object (20),
the spacing track (30) having first areas (32) with a first physical property and second areas (34) with a second physical property arranged in alternating manner with a period length (p) and
where the displacement of the first object relative to the second object is determined from measuring signals of sensors (C1, ..., C8) obtained on the basis of the first and/or the second physical property,
**characterized in that**
at least four sensors (C1, ..., C8) are arranged in a uniformly spaced manner from one another along the spacing track (30) over at least one period length (p) of said spacing track (30),
that the displacement is determined on the basis of at least one first switching signal (S10),
that the first switching signal (S10) assumes a first value, particularly HIGH, if the measuring signal (S7) of a first selected sensor (C7) of a first subgroup (C7, C2) of sensors assumes a maximum value within the first subgroup (C7, C2) and simultaneously the measuring signal (S8) of a second selected sensor (C8) of a second subgroup (C8, C5) of sensors assumes a maximum value within the second subgroup (C8, C5) and/or
that the first switching signal (S10) assumes a first value, particularly HIGH, if the measuring signals (S4) of a third selected sensor (C4) of a third subgroup (C4, C1) of sensors assumes a maximum value within the third subgroup (C4, C1) and simultaneously the measuring signal (S3) of a fourth selected sensor (C3) of a fourth (C3, C6) subgroup of sensors assumes a maximum value within the fourth subgroup (C3, C6),
that the first switching signal (S10) otherwise assumes a second value, particularly LOW,
that the first subgroup (C7, C2) is formed by the seventh and second sensors,
that the second subgroup (C8, C5) is formed by the eighth and fifth sensors, and
that the third subgroup (C4, C1) is formed by the fourth and first sensors,
that the fourth subgroup (C6, C3) is formed by the sixth and third sensors, and
that a minimum width of the first (32) and/or the second areas (34) or a lateral maxi-mum distance of the sensors (C1, ..., C8) and a proportion from a lateral distance of two adjacent sensors to a lateral extension of the smaller one of the two areas (32, 34) of the spacing track (30) is selected in such a manner that in any case temporary both sensors deliver a detection signal based on the smaller one of the two areas.

## Revendications

1. Capteur de déplacement différentiel pour déterminer un déplacement d'un premier objet (10) par rapport à un deuxième objet (20), pour la mise en oeuvre du procédé selon la revendication 6,
avec une unité de balayage (22) reliée ou à relier au premier objet (10), pour le balayage d'une piste graduée (30) reliée ou à relier au deuxième objet (20) et munie de premières régions (32) et de deuxièmes régions (34) qui sont disposées en alternance avec une période de durée (p),
dans lequel les premières régions (32) présentent une première propriété physique et les deuxièmes régions (34) présentent une deuxième propriété physique différente de cette dernière, et
dans lequel l'unité de balayage (22) comprend une pluralité de capteurs (C1, ..., C8) pour le balayage des premières régions (32) et des deuxièmes régions (34) sur la base de la première et/ou de la deuxième propriété physique, et avec une unité d'évaluation (60) reliée à l'unité de balayage (22) et destinée à déterminer le déplacement (x) sur la base de signaux de mesure (S1, ..., S8) des capteurs (C1, ..., C8),
**caractérisé :**
**en ce que** l'unité de balayage (22) comprend huit capteurs (C1, ..., C8), qui sont disposés sur au moins une période de durée (p) de la piste graduée (30) en étant répartis de manière régulière et espacés les uns des autres,
**en ce que**, dans l'unité d'évaluation (60), au moins un premier signal de commutation (S10) peut être produit à partir des signaux de mesure des capteurs (C1, ..., C8), le déplacement (x) pouvant alors être déterminé sur la base de ce au moins un premier signal de commutation (S10),
**en ce que** le premier signal de commutation (S10) prend une première valeur, plus particulièrement HIGH, si le signal de mesure (S7) d'un premier capteur (C7) sélectionné dans un premier sous-groupe de capteurs (C7, C2) prend une valeur maximale à l'intérieur du premier sous-groupe (C7, C2) et si, en même temps, le signal de mesure (S8) d'un deuxième capteur (C8) sélectionné dans un deuxième sous-groupe de capteurs (C8, C5) prend une valeur maximale à l'intérieur du deuxième sous-groupe (C8, C5), et/ou
**en ce que** le premier signal de commutation (S10) prend une première valeur, plus particulièrement HIGH, si le signal de mesure (S4) d'un troisième capteur (C4) sélectionné dans un troisième sous-groupe de capteurs (C4, C1) prend une valeur maximale à l'intérieur du troisième sous-groupe (C4, C1) et si, en même temps, le signal de mesure (S3) d'un quatrième capteur (C3) sélectionné dans un quatrième sous-groupe de capteurs (C3, C6) prend une valeur maximale à l'intérieur du quatrième sous-groupe (C3, C6),
**en ce que** le premier signal de commutation (S10) prend, sinon, une deuxième valeur, plus particulièrement LOW,
**en ce que** le premier sous-groupe (C7, C2) est constitué par les septième et deuxième capteurs,
**en ce que** le deuxième sous-groupe (C8, C5) est constitué par les huitième et cinquième capteurs,
**en ce que** le troisième sous-groupe (C4, C1) est constitué par les quatrième et premier capteurs,
**en ce que** le quatrième sous-groupe (C6, C3) est constitué par les sixième et troisième capteurs, et
**en ce qu'**une largeur minimale de la première région (32) et/ou de la deuxième région (34) ou une distance maximale latérale des capteurs (C1, ..., C8) et un rapport d'une distance latérale de deux capteurs adjacents à une étendue latérale de la plus petite des deux régions (32, 34) de la piste graduée (30) sont choisis de telle sorte que, en tout état de cause temporairement, les deux capteurs fournissent un signal de détection sur la base de la plus petite des deux régions.

2. Capteur de déplacement différentiel selon la revendication 1,
**caractérisé :**
**en ce que** les premières régions (32) sont électriquement conductrices et les deuxièmes régions (34) sont électriquement isolantes, et
**en ce que** les capteurs (C1, ..., C8) sont des capteurs (C1, ..., C8) inductifs.

3. Capteur de déplacement différentiel selon l'une des revendications 1 ou 2,
**caractérisé :**
**en ce que** l'unité d'évaluation (60) est organisée pour produire un deuxième signal de commutation (S20) qui présente un déphasage par rapport au premier signal de commutation (S10).

4. Capteur de déplacement différentiel selon l'une des revendications 1 à 3,
**caractérisé :**
**en ce que** le rapport cyclique du premier signal de commutation (S10) est 1:1.

5. Capteur de déplacement différentiel selon l'une des revendications 1 à 4,
**caractérisé :**
**en ce que** la piste graduée (30) est formée par une grille perforée.

6. Procédé de détermination d'un déplacement d'un premier objet par rapport à un deuxième objet,
en utilisant un capteur de déplacement différentiel selon une des revendications 1 à 5,
selon lequel une piste graduée (30) reliée au premier objet (10) est balayée au moyen d'une pluralité de capteurs (C1, ..., C8), qui sont reliés au deuxième objet (20),
la piste graduée (30) étant munie de premières régions (32) qui présentent une première propriété physique et de deuxièmes régions (34) qui présentent une deuxième propriété physique, et qui sont disposées en alternance avec une période de durée (p), et
selon lequel le déplacement du premier objet par rapport au deuxième objet est déterminé à partir de signaux de mesure des capteurs (C1, ..., C8), qui sont obtenus sur la base de la première et/ou de la deuxième propriété physique, **caractérisé :**
**en ce qu'**au moins quatre capteurs (C1, ..., C8) sont disposés le long de la piste graduée (30) sur au moins une période de durée (p) de la piste graduée (30) en étant répartis de manière régulière et espacés les uns des autres,
**en ce que** le déplacement est déterminé sur la base d'au moins un premier signal de commutation (S10),
**en ce que** le premier signal de commutation (S10) prend une première valeur, plus particulièrement HIGH, si le signal de mesure (S7) d'un premier capteur (C7) sélectionné dans un premier sous-groupe de capteurs (C7, C2) prend une valeur maximale à l'intérieur du premier sous-groupe (C7, C2) et si, en même temps, le signal de mesure (S8) d'un deuxième capteur (C8) sélectionné dans un deuxième sous-groupe de capteurs (C8, C5) prend une valeur maximale à l'intérieur du deuxième sous-groupe (C8, C5), et/ou
**en ce que** le premier signal de commutation (S10) prend une première valeur, plus particulièrement HIGH, si le signal de mesure (S4) d'un troisième capteur (C4) sélectionné dans un troisième sous-groupe de capteurs (C4, C1) prend une valeur maximale à l'intérieur du troisième sous-groupe (C4, C1) et si, en même temps, le signal de mesure (S3) d'un quatrième capteur (C3) sélectionné dans un quatrième sous-groupe de capteurs (C3, C6) prend une valeur maximale à l'intérieur du quatrième sous-groupe (C3, C6),
**en ce que** le premier signal de commutation (S10) prend, sinon, une deuxième valeur, plus particulièrement LOW,
**en ce que** le premier sous-groupe (C7, C2) est constitué par les septième et deuxième capteurs,
**en ce que** le deuxième sous-groupe (C8, C5) est constitué par les huitième et cinquième capteurs,
**en ce que** le troisième sous-groupe (C4, C1) est constitué par les quatrième et premier capteurs, et
**en ce que** le quatrième sous-groupe (C6, C3) est constitué par les sixième et troisième capteurs, et
**en ce qu'**une largeur minimale de la première région (32) et/ou de la deuxième région (34) ou une distance maximale latérale des capteurs (C1, ..., C8) et un rapport d'une distance latérale de deux capteurs adjacents à une étendue latérale de la plus petite des deux régions (32, 34) de la piste graduée (30) sont choisis de telle sorte que, en tout état de cause temporairement, les deux capteurs fournissent un signal de détection sur la base de la plus petite des deux régions.
